# EUROPÄISCHE PATENTSCHRIFT

(11) **EP 0 552 727 B1**
(45) Veröffentlichungstag und Bekanntmachung des Hinweises auf die Patenterteilung: **06.08.1997**
(21) Anmeldenummer: 93100791.8
(22) Anmeldetag: 20.01.1993
(51) Int. Cl.: H04B 1/12

(54) **Anordnung zum Unterdrücken von im Empfangssignal des Empfängers eines Hochfrequenz-Nachrichten-Übertragungssystems auftretenden Störsignalen**
Circuit for suppressing interfering signals occurring in the received signal in a radio transmission system
Circuit pour supprimer les signaux d'interférence dans un récepteur d'un système de radiotransmission

(30) Priorität: 22.01.1992 DE 4201542
(43) Veröffentlichungstag der Anmeldung: 28.07.1993
(73) Patentinhaber: Rohde & Schwarz GmbH & Co. KG, D-81671 München (DE)
(72) Erfinder: Reitberger, Peter, Dr., W-8000 München 60 (DE); Rieder, Thomas, Dipl.-Ing., W-8260 Mühldorf/Inn (DE)
(74) Vertreter: Graf, Walter, Dipl.-Ing.

(56) Entgegenhaltungen:
- US-A- 4 752 969
- GLOBECOM '82 CONFERENCE RECORD Bd. 2, Nr. C8, Dezember 1982, MIAMI,FL,US Seiten 2.1 - 2.5;BAR-NESS ET AL 'Cross Coupled PLL Interference Canceller with Closed Loop Amplitude Control'

## Beschreibung

Die Erfindung betrifft eine Anordnung laut Oberbegriff des Hauptanspruches.

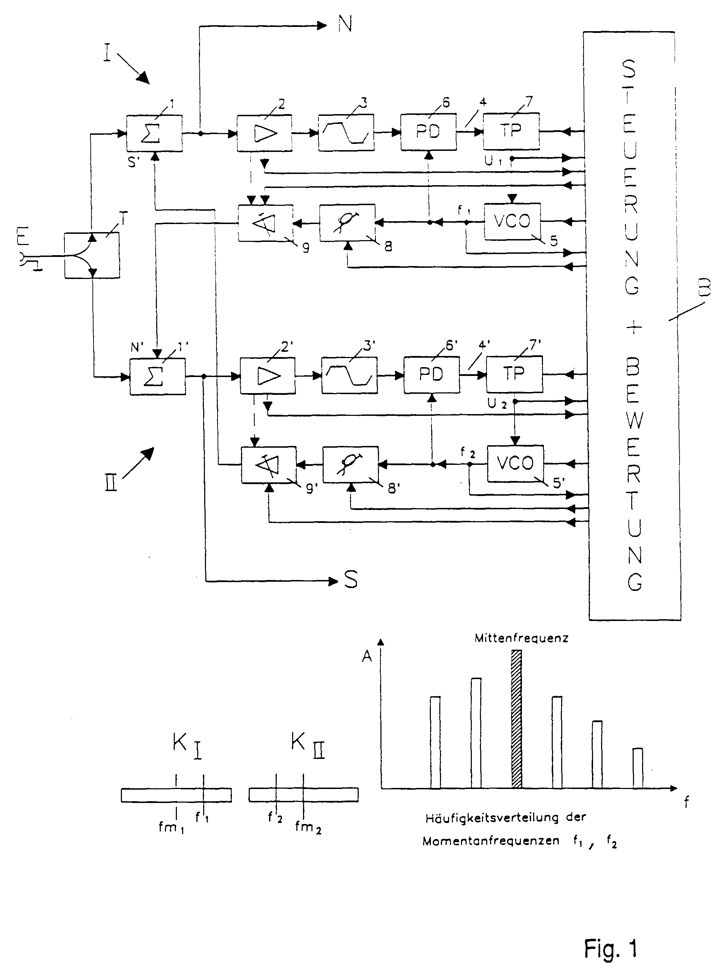

Eine Anordnung dieser Art zum Unterdrücken von Störsignalen in einem Empfangskanal ist bekannt (Recommendations and Reports of the CCIR, Vol. I "Spectrum Untilization and Monitoring" Dubrovnik, 1986, S. 63 bis 79, insbesonders Fig. 3, bzw. GLOBECOM '82 CONFERENCE RECORD, Bd. 2, Nr. C8, Dezember 1982, MIAMI, FL, US, Seiten 2.1.-2.5 BAR-NESS ET AL 'Cross Coupled PLL Interference Canceller with Closed Loop Amplitude Control', Seite 1; Abbildungen 1-4, Seite 4). Die örtliche Erzeugung der Kompensationssignale mit der Frequenz und Phase des Nutzsignals bzw. des Störsignals erfolgt durch eine Phasenregelschleife mit spannungsgesteuertem Oszillator, die Einstellung der Amplitude dieser Signale erfolgt über Pegelstellglieder, die jeweils zwischen dem Ausgang des spannungsgesteuerten Oszillators und dem Summierer des anderen Zweiges angeordnet sind. Sowohl die Einstellung der Frequenz der Oszillatoren der Phasenregelschleifen auf die Nutzsignal- bzw. Störsignal-Frequenz als auch die Einstellung der Pegelstellglieder auf die jeweilige Amplitude dieser Signale erfolgt bei der bekannten Anordnung von Hand und bleibt während des Betriebes unverändert. Die bekannte Anordnung ist also nur für Empfänger geeignet, bei denen die Empfangsfrequenz für das Nutzsignal und auch die Frequenz der Störsignale exakt vorbekannt ist und sich während des Betriebes nicht ändert.

Es ist Aufgabe der Erfindung, eine Anordnung dieser Art zu schaffen, bei der diese Einstellungen von Frequenz und Amplitude automatisch erfolgten.

Diese Ausgabe wird ausgehend von einer Anordnung laut Oberbegriff der Hauptansprüche durch deren kennzeichnende Merkmale gelöst. Vorteilhafte Weiterbildungen ergeben sich aus den Unteransprüchen.

Bei der erfindungsgemäßen Anordnung erfolgt die Einstellung der Frequenz und/oder Amplitude der lokal in den Zweigen erzeugten Kompensationssignale vollautomatisch in Abhängigkeit von einer Messung und Bewertung der jeweiligen Momentangrößen wie Momentanfrequenz oder Momentanamplitude der Empfangssignale, so daß eventuelle Änderungen der Frequenzlage dieser Empfangssignale selbst während des Betriebes automatisch kompensiert werden. Damit können die dem Störsignal entsprechenden lokal erzeugten Kompensationssignale bezüglich Frequenz und/oder Amplitude auch wesentlich genauer erzeugt werden und es ist eine um Größenordnungen bessere Unterdrückung von in einem Empfangssignal auftretenden Störsignalen möglich als mit einer bekannten Anordnung mit fest eingestellter Frequenz oder Amplitude. Es können Nutzsignale in einem Nutzsignalkanal aufbereitet und anschließend weiter ausgewertet werden, die praktisch völlig frei sind von eventuellen Störsignalen eines Nachbarkanals. Die erfindungsgmäße Anordnung ist damit insbesondere geeignet für Mobilfunkempfänger, bei denen in einem engen Kanalraster von beispielsweise nur 12 kHz FM-Signale empfangen werden. Wenn bei solchen Mobilfunkanlagen beispielsweise die Sendefrequenz geringfügig schwankt oder der Modulationsindex der Frequenzmodulation größer als erlaubt ist, wird bei der erfindungsgemäßen Anordnung automatisch das Störsignal mit dieser von der Norm abweichenden Frequenzlage lokal erzeugt und damit in dem benachbarten Nutzsignal-Kanal eine optimale Störsignalunterdrückung erreicht, obwohl dieses Störsignal des Nachbarkanals in der Frequenz bzw. im Modulationsindex schwankt, da durch die erfindungsgemäße Anordnung das lokal generierte Kompensationssignal exakt mit der tatsächlichen Störsignalfrequenz und mit dem tatsächlichen Störsignal-Modulationsindex rekonstruiert wird. Durch Messen der verschiedenen Parameter an den momentan empfangenen Signalen kann für beliebige Modulationsarten jeweils ein Kriterium eigener Art für eine möglichst exakte Unterdrückung von Störsignalen gefunden werden, also nicht nur für Frequenz- oder Amplitudenmodulation, sondern in gleicher Weise auch für phasenmodulierte oder FSK-modulierte Signale. Aus der Häufung der Momentanfrequenzen läßt sich bei frequenzmodulierten Signalen nicht nur die Mittenfrequenz exakt ermitteln, auf die dann der Lokaloszillator eingestellt wird, sondern es ist damit auch möglich, festzustellen, welche Kanäle eines Übertragungssystems belegt oder nicht belegt sind, welche Zweige der erfindungsgemäßen Anordnung einem bestimmten Kanal zuzuordnen sind, wie groß die Modulationsbandbreite (Modulationsindex) ist bzw. wie groß der Störeinfluß auf das eigene Nutzsignal ist. All dies kann durch eine Zeitanalyse der jeweiligen Momentanfrequenzen ermittelt werden. In gleicher Weise kann durch entsprechende Zeitanalyse der Amplitudenwerte in Ergänzung zur Zeitanalyse der Momentanfrequenzen eine Amplitudenklassifizierung der Momentanfrequenzen durchgeführt werden. So kann beispielsweise zusammen mit der Zählung und Speicherung der Momentanfrequenzen gleichzeitig auch die jeweilige Amplitude dieser Momentanfrequenzen gemessen und gespeichert werden, so daß auch für ein amplitudenmoduliertes Empfangssignal auf einfache Weise das Modulationssignal für die Kompensation ermittelt werden. In der Bewertungs- und Steuerschaltung kann beispielsweise auch die Auswertung so erfolgen, daß bestimmte Momentanfrequenzen nur dann gemessen und gespeichert werden, wenn die Amplitude derselben über einer voreinstellbaren Schwelle liegt. Je nach Art der verwendeten Modulation genügt es in manchen Fällen, nur die Frequenz oder nur die Amplitude des Nutzsignals bzw. Störsignals zu messen und als Kompensationssignal zu erzeugen, in den meisten Fällen ist es für eine gute Kompensation aber zweckmäßig, sowohl die Frequenz als auch die Amplitude und möglichst auch noch die Phase des Nutzsignals bzw. Störsignals zu messen und sowohl die Frequenz, Amplitude und Phase des in dem jeweiligen Zweig erzeugten Kompensationssignals entsprechend einzustellen.

Die Schaltung zum Erzeugen der Kompensationssignale ist im einfachsten Fall ein Synthesizer, dessen Frequenz, Phase und Amplitude elektronisch einstellbar ist. Vorzugsweise wird hierfür jedoch eine an sich bekannte Phasenregelschleife mit spannungsgesteuertem Oszillator benutzt, da sich hierdurch eine besonders einfache Art für die Messung der Frequenz und Phase ergibt.

Die erfindungsgemäße Anordnung ist nicht nur zum Unterdrücken von Störsignalen in einem Empfangssignal des Empfängers eines Nachrichtenübertragungssystems geeignet, bei der also das vom Störsignal bereinigte Nutzsignal anschließend in einem Nachrichtenempfänger ausgewertet wird, sondern sie ist in gleicher Weise auch zur Unterdrückung von Störsignalen in einem Signal geeignet, an dem bestimmte Größen frei von eventuellen Störsignalen gemessen werden sollen, sie eignet sich also unmittelbar als selektive Meßeinrichtung beispielsweise zum Messen der Spannung, von Strömen, der Leistung, der Frequenz, der Phase oder dergleichen an einem von benachbarten Störsignalen befreiten Nutzsignal oder auch zum Messen entsprechender Meßgrößen an den vom Empfangssignal selektierten Störsignalen bzw. zum Messen von Größen zwischen diesen beiden Signalen, die jeweils von der Störgröße des Nachbarsignals befreit ist.

Die Erfindung wird im folgenden anhand schematischer Zeichnungen an Ausführungsbeispielen näher erläutert.

Fig. 1 zeigt das Blockschaltbild einer aus nur zwei parallelen Zweigen bestehenden Anordnung zum Unterdrücken von im Empfangssignal E auftretenden Störsignalen S, also zum Erzeugen eines Nutzsignales N, das von diesen Störsignalen S befreit ist und das anschließend beispielsweise in einem üblichen Kanalempfänger als Nachrichtensignal ausgewertet wird. In dem gezeigten Ausführungsbeispiel erfolgt die Unterdrückung der Störsignale in der Hochfrequenzebene, obwohl das erfindungsgemäße Prinzip natürlich auch in der Zwischenfrequenz- oder sogar Niederfrequenzebene (z.B. bei linearen Modulationsmethoden) anwendbar ist. Das Hochfrequenz-Empfangssignal E wird über einen Verteiler T auf zwei parallele Zweige I und II aufgeteilt, der obere Zweig I besteht aus einem Summierer 1, einem nachfolgenden Verstärker und Amplitudenbewerter 2, einem Begrenzer 3 sowie einer Phasenregelschleife 4 mit einem spannungsgesteuerten Oszillator 5, einem Phasendetektor 6 und einem Tiefpaßfilter 7. Die Ausgangsfrequenz des spannungsgesteuerten Oszillators 5 wird über ein Phasenstellglied 8 einem Pegelstellglied 9 zugeführt. Der untere Zweig II ist in gleicher Weise ausgebildet, die entsprechenden Baugruppen sind jeweils mit 1' bis 9' bezeichnet. Der Ausgang des Pegelstellgliedes 9 ist mit dem Summierer 1' des Zweiges II verbunden, der Ausgang des Pegelstellgliedes 9' des Zweiges II mit dem Summierer 1 des anderen Zweiges I. Den beiden Zweigen I und II ist außerdem eine Bewertungs- und Steuerschaltung B zugeordnet, die über die eingezeichneten Wirkverbindungen mit den einzelnen Baugruppen der Zweige I und II verbunden sind, und durch welche einerseits die momentane Frequenz, Phase und Amplitude und bei Bedarf auch noch andere Größen der in den Zweigen I und II aufbereiteten Signale N und S gemessen und bewertet werden. In Abhängigkeit von dieser Messung und Bewertung werden, wie nachfolgend näher beschrieben ist, die einzelnen Baugruppen der Zweige I bzw. II über die eingezeichneten Wirkverbindungen so eingestellt, daß jeweils eine optimale Unterdrückung der Störsignale S im Empfangssignal E erfolgt und somit von Störsignalen S befreite Nutzsignale N entstehen.

Im Ausführungsbeispiel nach Fig. 1 ist das Eingangssignal E ein frequenzmoduliertes Signal eines aus nur zwei Kanälen bestehenden Hochfrequenz-Nachrichtenübertragungssystems, der eine Kanal K_{I} ist beispielsweise durch seine Mittenfrequenz fₘ₁ definiert, er besitzt beispielsweise eine Bandbreite von 12 kHz, wie dies in Mobilfunkanlagen üblich ist. Der Nachbarkanal K_{II} sei durch seine Mittenfrequenz fₘ₂ definiert. In die Bewertungs- und Steuerschaltung B sind die Frequenzlagen fm1 und fm2 der beiden benachbarten Kanäle KI, KII als Vorinformation eingegeben, der Oszillator 5 wird damit grob eingestellt auf eine im Kanal KI liegende Frequenz und der Oszillator 5' auf eine im Kanal KII liegende Frequenz. Der Fangbereich der beiden Oszillatoren 5 und 5' ist außerdem so gewählt, daß sie jeweils innerhalb der Kanalbreite von beispielsweise 12 kHz in der Frequenz geregelt werden können. Durch Übersprechen besteht das Empfangssignal E aus einem Gemisch dieser beiden Frequenzmodulationssignale f₁ und f₂, ausgewertet werden soll jedoch nur das Nutzsignal N des Kanals K_{I}, das durch das Störsignal S des Nachbarkanals K_{II} gestört ist. Über die Bewertungs- und Steuerschaltung B wird die Frequenz f₁ des Nutzsignals N ermittelt und zwar entweder unmittelbar durch eine Auswertung der Ausgangsfrequenz f₁ des Oszillators 5 oder durch Auswertung der Steuerspannung U₁ am Ausgang des Tiefpasses 7 der Phasenregelschleife 4, die dieser Frequenz f₁ proportional ist. In der Schaltung B werden in einem vorbestimmten Zeitintervall alle Momentanfrequenzwerte f₁ gemessen, die infolge der Frequenzmodulation innerhalb des Kanals K_{I} schwanken. Aus der Häufigkeit dieser Momentanfrequenzen wird die aktuelle Mittenfrequenz des Nutzsignals N des Kanals K_{I} ermittelt, die nicht mit der genormten Kanalmittenfrequenz fₘ₁ übereinstimmen muß, wie dies beispielsweise infolge Unstabilität der Sendefrequenz oder durch ungewollte Schwankungen der Modulationsparameter der Fall sein kann. In der Bewertungsschaltung B wird auf diese Weise also exakt die aktuelle Mittenfrequenz des Nutzsignals N ermittelt, der Oszillator 5 wird damit auf diese Mittenfrequenz f₁ voreingestellt, so daß dem Summierer 1' des zweiten Zweiges II das dem Nutzsignal N entsprechende Kompensationssignal exakt mit der Momentanfrequenz zugeführt wird, der Oszillator 5 also im optimalen Fangbereich arbeitet. In gleicher Weise wird auch die Ausgangsfrequenz f₂ des Oszillators 5' des zweiten Zweiges II exakt mit der Trägerfrequenz des Störsignales S erzeugt, wiederum durch vorherige Messung der aktuellen Mittenfrequenz und entsprechende Voreinstellung des Oszillators 5'. Die den beiden Summierern 1 bzw. 1' zugeführten lokal erzeugten Kompensationssignale N' bzw. S' sind jeweils um 180° in der Phase verschoben gegenüber den Signalanteilen N bzw. S im unkompensierten Eingangssignal E, dies wird erreicht durch einen etwa 90° Phasenschieber 8 bzw. 8', da durch die Phasenregelschleife 4 bereits eine Phasendrehung von etwa 90° erzeugt wird.

Gleichzeitig wird jedoch auch noch eine entsprechende automatische Einstellung der Amplitude dieser Kompensationssignale N' bzw. S' durch die jeweiligen stellglieder 9 bzw. 9' vorgenommen, dazu wird beispielsweise in der Bewertungs- und Steuerschaltung B die momentane Amplitude der jeweils im Zeitfenster gemessenen Momentanfrequenzen gemessen und gespeichert und in Abhängigkeit davon das Pegelstellglied 9 bzw. 9' entsprechend eingestellt. Im einfachsten Fall kann dies auch unmittelbar durch Steuerung des Pegelstellgliedes über die zugehörige Amplitudenbewertungsschaltung 2 geschehen, wie dies gestrichelt durch die unmittelbare Wirkverbindung zwischen den Baugruppen 2 und 9 angedeutet ist. Auf diese Weise wird erreicht, daß bei dem frequenzmodulierten Empfangssignal E auch starke Amplitudenschwankungen, wie sie vor allem bei Mobilfunkanlagen auftreten, bei der Erzeugung der Kompensationssignale N' bzw. S' exakt berücksichtigt werden.

In Abhängigkeit von den in der Bewertungs- und Steuerschaltung B bewerteten Meßgrößen der jeweiligen Momentansignale können auch andere Baugruppen der Zweige I und II entsprechend gesteuert sein. So kann beispielsweise der Tiefpaß 7 bzw. 7' der Phasenregelschleife 4 je nach Anwendungsfall in seiner Bandbreite gesteuert sein, bei Frequenzmodulation wird die Bandbreite des Tiefpasses 7, 7' relativ breit gewählt, damit die Phasenregelschleife der Frequenzmodulation schnell folgen kann, dafür wird jedoch die Bandbreite des Pegelstellgliedes 9 bzw. 9' beispielsweise relativ schmal gewählt, da hier ja keine hochfrequenten Amplitudenänderungen ausgeregelt werden müssen. Umgekehrt ist für die Kompensation von amplitudenmodulierten Signalen die Bandbreite für den Tiefpaß 7, 7' relativ schmal gewählt, da hier ja nur geringe Trägerfrequenzschwankungen zu befürchten sind, dafür wird die Bandbreite für das Pegelstellglied 9, 9' relativ groß gewählt, da hier ja durch die Amplitudenmodulation bedingte Amplitudenänderungen schnell nachgeregelt werden müssen. In ähnlicher Weise könnte beispielsweise auch das Phasenstellglied 8, 8' in Abhängigkeit von den Meßparametern eingestellt werden, was durch entsprechende Auswertung der Ausgangssignale der Summierer 1 bzw. 1' in der Schaltung B erfolgen kann, so daß immer eine exakte gegenphasige Zuführung der Kompensationssignale S' bzw. N' gewährleistet ist. Aus den verschiedenen Meßgrößen kann in der Schaltung B außerdem automatisch erkannt werden, ob es sich beispielsweise um Amplitudenmodulation oder Frequenzmodulation oder eine andere bekannte Modulationsart handelt, so daß auch diese Informationen bei der anschließenden Erzeugung der lokalen Kompensationssignale N' bzw. S' entsprechend berücksichtigt werden können.

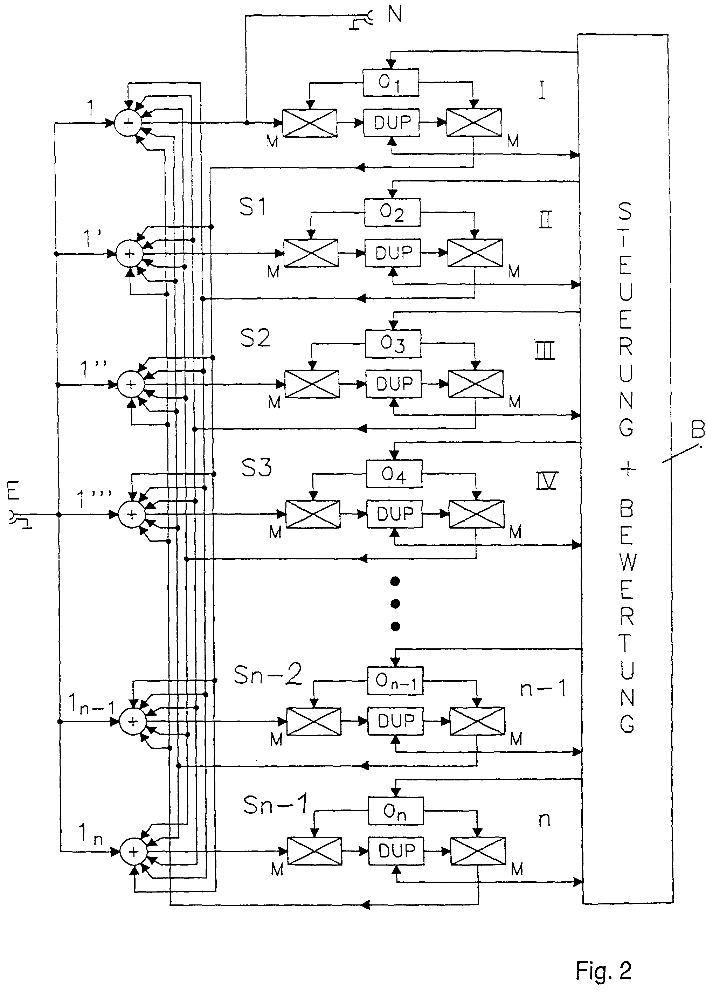

Die erfindungsgemäße Anordnung ist nicht nur für zwei Zweige I und II nach Fig. 1 geeignet, sondern gemäß einer Weiterbildung der Erfindung auch für drei oder mehr Zweige, wie dies Fig. 2 zeigt. In diesem Beispiel sind n-Zweige I bis n parallel geschaltet, sie sind jeweils über eine entsprechende Vielzahl von Summierern 1, 1' bis 1ₙ parallel mit einem Eingangssignal E gespeist. Über eine gemeinsame Bewertungs- und Steuerschaltung B sind diese einzelnen Zweige I, II, III bis n in gleicher Weise wie im Zusammenhang mit Fig. 1 beschrieben auf verschiedene Nutz- bzw. Störsignale einstellbar. In einem Mobilfunksystem, das in einem Frequenzbereich zwischen 410 und 430 MHz mit 1600 Kanälen von jeweils 12 kHz-Breite arbeitet ist dann nur erforderlich, über die Bewertungs- und Steuerschaltung B, die als Vorinformation wieder die Frequenzlage der einzelnen Kanäle enthält, beispielsweise für den Nutzkanal Nr. 1230 den zugehörigen Oszillator entsprechend voreinzustellen und als Nutzkanal zu definieren und gleichzeitig den Orzillator des darunterliegenden KanalsNr. 1229 und den des darüberliegenden Kanals 1231 entsprechend voreinzustellen und als Störkanal zu definieren und so die Kompensationssignale N' und S' zu erzeugen. Auf diese Weise ist es beispielsweise möglich, aus einem stark gestörten Eingangssignal E ein Nutzsignal N auszufiltern, das nicht nur von einem Störsignal S1 befreit ist, das in einem oberhalb des Nutzsignalkanals liegenden Kanal übertragen wird, sondern beispielsweise auch noch von einem Störsignal S2, das in einem unterhalb des Nutzsignalkanals liegenden Kanal übertragen wird, in gleicher Weise können dann auch noch weitere Störsignale S3 bis Sₙ aus dem Empfangssignal E eliminiert werden, die in anderen weiter abliegenden Kanälen übertragen werden. Dazu ist es nur erforderlich, daß über die Messung und Steuerung mittels der Bewertungs- und Steuerschaltung B die einzelnen Zweige auf die jeweilige Frequenz eingestellt werden. Es ist auch möglich, daß zwei oder mehrere dieser Vielzahl von Zweigen auf den gleichen Kanal eingestellt sind und hier dann auf unterschiedliche Störsignale in diesem gemeinsamen Kanal abgestimmt werden.

Fig. 2 zeigt außerdem noch einen besonders einfachen Aufbau für die einzelnen Zweige, die einzelnen Baugruppen DUP für die Nachbildung der Signale bestimmt aus den Baugruppen 2 bis 9 nach Fig. 1 sind jeweils identisch aufgebaut, arbeiten also jeweils im gleichen Bereich der Oszillatorfrequenzen, die unterschiedliche Frequenzlage wird über die Schaltung B mittels eines jedem Zweig zugeordneten Oszillator O₁ bis Oₙ bestimmt, der mit zwei gleichartigen Mischern M jeweils vor und hinter der Baugruppe DUP zusammenwirkt. Bezogen auf das Ausführungsbeispiel nach Fig. 1 bedeutet dies beispielsweise, daß der Oszillator O₁ die Frequenzlage des Nutzsignals N für den oberen Zweig I bestimmt und der Oszillator O2 die Frequenzlage für das Störsignal S während die beiden Oszillatoren 5 und 5' jeweils bei einer vorzugsweise niedrigeren gleichen Frequenz arbeiten. Dadurch ergibt sich ein besonders einfacher und billiger Gesamtaufbau. In manchen Fällen kann es ausreichend sein, nur das Störsignals S' bezüglich Frequenz und/oder Amplitude sowie Phase zu generieren und damit nur das Nutzsignal N zu kompensieren, also die Erzeugung des dem Nutzsignal N entsprechenden Kompensationssignals N' wegzulassen. Im allgemeinen ist es jedoch sinnvoll, sowohl vom Nutzsignal als auch vom Störsignal die entsprechenden Kompensationssignale N' und S' zu erzeugen, da damit auch ein kompensiertes Störsignal S erzeugt wird, von dem dann auf einfachere und genauere Weise das zugehörige Kompensationssignal S' abgeleitet werden kann.

## Patentansprüche

1. Anordnung zum Unterdrücken von im Empfangssignal (E) des Empfängers eines Hochfrequenz-Nachrichten-Übertragungssystems auftretenden Störsignalen (S), die von mindestens einem dem Kanal (K1) des Nutzsignals (N) benachbarten Nachbarkanal (K2) herrühren, bei welcher das Empfangssignal (E) in zwei Zweige (I, II) aufgeteilt wird, von denen der eine (I) einen Summierer (1) sowie eine Schaltung (DUP, 2 bis 9) zum Erzeugen eines Signals (N') mit einer dem Nutzsignal (N) entsprechenden Frequenz und der andere (II) ebenfalls einen Summierer (1') sowie eine Schaltung (DUP, 2' bis 9') zum Erzeugen eines Signals (S') mit einer dem Störsignal (S) entsprechenden Frequenz aufweist, und die so erzeugten Signale (N', S') dieser Zweige (I, II) jeweils gegenphasig dem Summierer (1', 1) des jeweils anderen Zweiges zugeführt werden, dadurch **gekennzeichnet,** daß den Zweigen (I, II) eine Bewertungs- und Steuerschaltung (B) zugeordnet ist, durch welche die momentane Frequenz (f1) des dem einen Zweig (I) zugeordneten Nutzsignales (N) und die momentane Frequenz (f2) des dem anderen Zweig (II) zugeordneten Störsignals (S) gemessen werden, und durch welche in Abhängigkeit von diesen Meßwerten (f1, f2) die Frequenz des in dem jeweiligen Zweig erzeugten Signals (N', S') eingestellt wird.

2. Anordnung zum Unterdrücken von im Empfangssignal (E) des Empfängers eines Hochfrequenz-Nachrichten-Übertragungssystems auftretenden Störsignalen (S), die von mindestens einem dem Kanal (K1) des Nutzsignals (N) benachbarten Nachbarkanal (K2) herrühren, bei welcher das Empfangssignal (E) in zwei Zweige (I, II) aufgeteilt wird, von denen der eine (I) einen Summierer (1) sowie eine Schaltung (DUP, 2 bis 9) zum Erzeugen eines Signals (N') mit einer dem Nutzsignal (N) entsprechenden Amplitude und der andere (II) ebenfalls einen Summierer (1') sowie eine Schaltung (DUP, 2' bis 9') zum Erzeugen eines Signals (S') mit einer dem Störsignal (S) entsprechenden Amplitude aufweist, und die so erzeugten Signale (N', S') dieser Zweige (I, II) jeweils gegenphasig dem Summierer (1', 1) des jeweils anderen Zweiges zugeführt werden, dadurch **gekennzeichnet,** daß jedem Zweig (I, II) eine zusätzliche Einrichtung (2, 2', B) zum Messen der Amplitude des Nutz- bzw. Störsignals (N, S) zugeordnet ist und in Abhängigkeit von diesen tudenmeßwerten die Amplitude des in dem jeweiligen Zweig erzeugten Signals (N', S') automatisch eingestellt wird.

3. Anordnung zum Unterdrücken von im Empfangssignal (E) des Empfängers eines Hochfrequenz-Nachrichten-Übertragungssystems auftretenden Störsignalen (S), die von mindestens einem dem Kanal (K1) des Nutzsignals (N) benachbarten Nachbarkanal (K2) herrühren, bei welcher das Empfangssignal (E) in zwei Zweige (I, II) aufgeteilt wird, von denen der eine (I) einen Summierer (1) sowie eine Schaltung (DUP, 2 bis 9) zum Erzeugen eines Signals (N') mit einer dem Nutzsignal (N) entsprechenden Frequenz und Amplitude und der andere (II) ebenfalls einen Summierer (1') sowie eine Schaltung (DUP, 2' bis 9') zum Erzeugen eines Signals (S') mit einer dem Störsignal (S) entsprechenden Frequenz und Amplitude aufweist, und die so erzeugten Signale (N', S') dieser Zweige (I, II) jeweils gegenphasig dem Summierer (1', 1) des jeweils anderen Zweiges zugeführt werden, dadurch **gekennzeichnet,** daß den Zweigen (I, II) eine Bewertungs- und Steuerschaltung (B) zugeordnet ist, durch welche die momentane Frequenz (f1) des dem einen Zweig (I) zugeordneten Nutzsignales (N) und die momentane Frequenz (f2) des dem anderen Zweig (II) zugeordneten Störsignals (S) gemessen werden, daß jeder Zweig (I, II) eine zusätzliche Einrichtung (2, 2', B) zum Messen der Amplitude des Nutz- bzw. Störsignals (N, S) aufweist und durch diese Bewertungs- und Steuerschaltung (B) und die Amplituden-Meßeinrichtung (2, 2', B) die Frequenz und Amplitude des in dem jeweiligen Zweig erzeugten Signals (N', S') automatisch eingestellt werden.

4. Anordnung nach Anspruch 1 oder 3, dadurch **gekennzeichnet,** daß in der Bewertungs- und Steuerschaltung (B) die Häufigkeit des Auftretens von Momentanfrequenzen in den Zweigen bestimmt wird und in Abhängigkeit davon die Frequenz des dem Nutz- bzw. bzw. Störsignal entsprechenden Signals (N' S') in der Signalerzeugungsschaltung (DUP, 2 bis 9) des entsprechenden Zweiges (I bzw. II) eingestellt wird.

5. Anordnung nach Anspruch 1, 3 oder 4, dadurch **gekennzeichnet,** daß durch die Bewertungs- und Steuerschaltung (B) zusätzlich auch noch die momentane Phase (Φ) der gemessenen momentanen Frequenzen (f1, f2) gemessen wird und in Abhängigkeit von diesen Phasenmeßwerten auch die Phase des in dem jeweiligen Zweig erzeugten Signals (N', S') eingestellt wird.

6. Anordnung nach Anspruch 1, 3, 4 oder 5 bei welcher die Schaltung zum Erzeugen eines Signals (N', S') mit einer dem Nutz- bzw. Störsignal entsprechenden Frequenz jeweils durch eine Phasenregelschleife (4) mit spannungsgesteuertem Oszillator (5) gebildet ist, dadurch **gekennzeichnet,** daß die Messung der Frequenz und Phase des dem jeweiligen Zweig (I bzw. II) zugeordneten Nutz- oder Störsignals (N, S) durch Messen der Ausgangsfrequenz (f₁, f₂) oder der Steuerspannung (U₁, U₂) des spannungsgesteuerten Oszillators (5, 5') erfolgt.

7. Anordnung nach Anspruch 6, dadurch **gekennzeichnet,** daß durch die Bewertungs- und Steuerschaltung (B) in Abhängigkeit von den Frequenz- und Phasen-Meßwerten die Bandbreite des Tiefpasses (7, 7') der Phasenregelschleife (4, 4') steuerbar ist.

8. Anordnung nach Anspruch 6, dadurch **gekennzeichnet,** daß der spannungsgesteuerte Oszillator (5, 5') über die Bewertungs- und Steuerschaltung (B) auf einen durch Auswertung der Häufigkeitsverteilung der Momentanfrequenzen ermittelten Frequenzwert eingestellt wird.

9. Anordnung nach einem der Ansprüche 2 bis 8, dadurch **gekennzeichnet,** daß zwischen der Schaltung (DUP 2 bis 9) zur Erzeugung des Signales des einen Zweiges (I) und dem Summierer (1') des anderen Zweiges (II) jeweils ein Pegelstellglied (9, 9') angeordnet ist, das über die Amplituden-Meßeinrichtung (2, 2', B) automatisch eingestellt wird.

10. Anordnung nach Anspruch 9, dadurch **gekennzeichnet,** daß die schwindigkeit der Pegelstellglieder (9, 9') in hängigkeit von den in der Bewertungs- und Steuerschaltung ausgewerteten Meßwerten einstellbar ist.

11. Anordnung nach Anspruch 9, dadurch **gekennzeichnet,** daß die Amplituden-Meßeinrichtung eine im jeweiligen Zweig angeordnete Amplitudenbewertungsschaltung (2, 2') ist, über welche die Pegelstellglieder (9, 9') unmittelbar gesteuert sind.

12. Anordnung nach Anspruch 9, dadurch **gekennzeichnet,** daß die Messung und Bewertung der Amplitude des Nutz- bzw. Störsignals (N, S) in der Bewertungs- und Steuerschaltung (B) erfolgt und über diese die Pegelstellglieder (9, 9') gesteuert sind.

13. Anordnung nach einem der vorhergehenden Ansprüche, dadurch **gekennzeichnet,** daß die Messung der Meßgrößen und die davon abgeleitete Steuerung in der Hochfrequenz-, und/oder in der ZF-, und/oder in der NF-Ebene erfolgt.

14. Anordnung nach einem der vorhergehenden Ansprüche, dadurch **gekennzeichnet,** daß die Signaleinstellschaltung (DUP, 2 bis 9, 2' bis 9') nebst Amplitudenbewertungsschaltung (2, 2') und Pegel- und Phasenstellglied (9, 8, 9', 8') jeweils eine in allen Zweigen (1, 2) gleiche Grundschaltung (DUP) bilden, vor und hinter dieser Grundschaltung (DUP) jeweils ein Mischer (M) angeordnet ist und diesen beiden Mischern (M) ein Überlagerungsoszillator (O₁ bis Oₙ) zugeordnet ist, der durch die Bewertungs- und Steuerschaltung (B) auf eine der jeweils gewünschten Zweigfrequenz entsprechende Mischfrequenz einstellbar ist.

15. Anordnung nach einem der vorhergehenden Ansprüche, **gekennzeichnet** durch ihre Verwendung als Meßeinrichtung zum Messen von beliebigen elektrischen Meßgrößen an den bereinigten Nutz- und/oder Störsignalen (N, S).

## Claims

1. Arrangement for suppressing interfering signals (S) appearing in the receive signal (E) of the receiver of a radio-frequency communication system and originating from at least one adjacent channel (K2) adjoining the channel (Kl) of the wanted signal (N), where the receive signal (E) is split into two branches (I, II), one of which (I) features a summing unit (1) and a circuit (DUP, 2 to 9) for generating a signal (N') at a frequency corresponding to the wanted signal (N) and the other (II) likewise features a summing unit (1') and a circuit (DUP, 2' to 9') for generating a signal (S') at a frequency corresponding to the interfering signal (S), and the thus generated signals (N', S') from these branches (I, II) are in each case sent in phase opposition to the summing unit (1', 1) of the respective other branch,
characterised in that assigned to the branches (I, II) is an evaluating and control circuit (B) which measures the instantaneous frequency (fl) of the wanted signal (N) assigned to the first branch (I) and the instantaneous frequency (f2) of the interfering signal (S) assigned to the other branch (II) and which is used to adjust the frequency of the signal (N', S') generated in the respective branch in dependence on these measured values (f1, f2).

2. Arrangement for suppressing interfering signals (S) appearing in the receive signal (E) of the receiver of a radio-frequency communication system and originating from at least one adjacent channel (K2) adjoining the channel (Kl) of the wanted signal (N), where the receive signal (E) is split into two branches (I, II), one of which (I) features a summing unit (1) and a circuit (DUP, 2 to 9) for generating a signal (N') with an amplitude corresponding to the wanted signal (N) and the other (II) likewise features a summing unit (1') and a circuit (DUP, 2' to 9') for generating a signal (S') with an amplitude corresponding to the interfering signal (S), and the thus generated signals (N', S') from these branches (I, II) are in each case sent in phase opposition to the summing unit (1', 1) of the respective other branch,
characterised in that to each branch (I, II) is assigned a supplemental device (2, 2', B) for measuring the amplitude of the useful and interfering signals respectively (N, S) and the amplitude of the signal (N', S') generated in the respective branch is automatically adjusted in dependence on these amplitude measurements.

3. Arrangement for suppressing interfering signals (S) appearing in the receive signal (E) of the receiver of a radio-frequency communication system and originating from at least one adjacent channel (K2) adjoining the channel (Kl) of the wanted signal (N), where the receive signal (E) is split into two branches (I, II), one of which (I) features a summing unit (1) and a circuit (DUP, 2 to 9) for generating a signal (N') having a frequency and amplitude corresponding to the wanted signal (N) and the other (II) likewise features a summing unit (1') and a circuit (DUP, 2' to 9') for generating a signal (S') having a frequency and amplitude corresponding to the interfering signal (S), and the thus generated signals (N', S') from these branches (I, II) are in each case sent in phase opposition to the summing unit (1', 1) of the respective other branch,
characterised in that assigned to the branches (I, II) is an evaluating and control circuit (B) which measures the instantaneous frequency (f1) of the wanted signal (N) assigned to the first branch (I) and the instantaneous frequency (f2) of the interfering signal (S) assigned to the other branch (II), that each branch (I, II) features a supplemental device (2, 2', B) for measuring the amplitude of the useful and interfering signals respectively (N, S) and this evaluating and control circuit (B) and the amplitude measuring device (2, 2', B) are used to automatically adjust the frequency and amplitude of the signal (N', S') generated in the respective branch.

4. Arrangement according to claim 1 or 3, characterised in that in the evaluating and control circuit (B) the incidence of instantaneous frequencies in the branches is determined and in dependence thereon the frequency of the signal (N' and S' respectively) corresponding to the wanted signal or interfering signal is adjusted in the signal generation circuit (DUP, 2 to 9) of the corresponding branch (I and II respectively).

5. Arrangement according to claim 1, 3 or 4, characterised in that the evaluating and control circuit (B) in addition measures the instantaneous phase (φ) of the measured instantaneous frequencies (f1, f2) and in dependence on these phase measurements also adjusts the phase of the signal (N', S') generated in the respective branch.

6. Arrangement according to claim 1, 3, 4 or 5, in which the circuit for generating a signal (N', S') at a frequency corresponding to the wanted signal or interfering signal is in each case formed by a closed phase control loop (4) with a voltage-controlled oscillator (5), characterised in that measurement of the frequency and phase of the wanted signal and interfering signal (N, S) associated with the respective branch (I, II) is done by measuring the output frequency (f₁, f₂) or the control voltage (U₁, U₂) of the voltage-controlled oscillator (5, 5').

7. Arrangement according to claim 6, characterised in that the bandwidth of the low-pass filter (7, 7') of the closed phase control loop (4, 4') is adapted to be controlled by the evaluating and control circuit (B) in dependence on the frequency and phase measurements.

8. Arrangement according to claim 6, characterised in that the voltage-controlled oscillator (5, 5') is adjusted via the evaluating and control circuit (B) to a frequency level ascertained by evaluating the frequency distribution of the instantaneous frequencies.

9. Arrangement according to any of claims 2 to 8, characterised in that between the circuit (DUP 2 to 9) for generating the signal from one branch (I) and the summing unit (1') of the other branch (II) is arranged a respective level positioning element (9, 9') which is automatically adjusted using the amplitude measuring device (2, 2', B).

10. Arrangement according to claim 9, characterised in that the final control rate of the level positioning elements (9, 9') is adapted to be adjusted in dependence on the measurements evaluated in the evaluating and control circuit.

11. Arrangement according to claim 9, characterised in that the amplitude measuring device is an amplitude evaluating circuit (2, 2') which is arranged in the respective branch and via which the level positioning elements (9, 9') are directly controlled.

12. Arrangement according to claim 9, characterised in that the measurement and evaluation of the amplitude of the wanted signal and interfering signal (N, S) takes place in the evaluating and control circuit (B) and the latter is used to control the level positioning elements (9, 9').

13. Arrangement according to any of the preceding claims, characterised in that the measurement of the measured variables and the control derived therefrom takes place in the radio frequency range and/or in the intermediate frequency range and/or in the low frequency range.

14. Arrangement according to any of the preceding claims, characterised in that the signal adjusting circuit (DUP, 2 to 9, 2' to 9') together with the amplitude evaluating circuit (2, 2') and the level and phase positioning element (9, 8, 9', 8') in each case constitute a basic circuit (DUP) identical in all branches (1, 2), before and behind this basic circuit (DUP) there is arranged a respective mixer (M) and associated with these two mixers (M) is a heterodyning oscillator (Oₗ to O_{*n*}) which is adapted to be adjusted by the evaluating and control circuit (B) to a mixed frequency corresponding to the respectively desired branch frequency.

15. Arrangement according to any of the preceding claims, characterised by its use as a measuring device for measuring any desired electrical measured variables on the purged useful and/or interfering signals (N, S).

## Revendications

1. Circuit de suppression de signaux parasites (S) contenus dans le signal de réception (E) du récepteur d'un système de transmission d'information à haute fréquence, ces signaux parasites provenant d'au moins un canal voisin (K2) du canal (K1) du signal utile (N),
selon lequel, le signal de réception (E) est réparti en deux branches (I, II) dont l'une (I) contient un additionneur (1) ainsi qu'un circuit (DUP, 2-9) pour générer un signal (N') ayant une fréquence correspondant à celle du signal utile (N) et dont l'autre (II) comporte également un additionneur (1') ainsi qu'un circuit (DUP, 2'-9') pour générer un signal (S') ayant la fréquence du signal parasite (S),
et les signaux (N', S') ainsi obtenus dans les branches (I, II) sont appliqués chaque fois en opposition de phase à l'additionneur (1', 1) de l'autre branche,
caractérisé en ce que
les branches (I, II) comportent un circuit d'exploitation et de commande (B) qui mesure la fréquence instantanée (f1) du signal utile (N) associé à la branche (I) et la fréquence instantanée (f2) du signal parasite (S) associé à l'autre branche (II), et qui règle la fréquence du signal (N', S') généré dans la branche respective.en fonction des valeurs de mesure (f1, f2).

2. Circuit de suppression de signaux parasites (S) contenus dans le signal de réception (E) du récepteur d'un système de transmission d'information à haute fréquence, produits par au moins un canal (K2) voisin du canal (K1) du signal utile (N),
selon lequel le signal de réception (E) est réparti entre deux branches (I, II) dont l'une (I) comporte un additionneur (1) ainsi qu'un circuit (DUP, 2-9) pour générer un signal (N') d'amplitude correspondant à celle du signal utile (N) et l'autre branche (II) comporte également un additionneur (1') ainsi qu'un circuit (DUP, 2'-9') générant un signal (S') d'amplitude correspondant à celle du signal parasite (S),
et les signaux (N', S') ainsi obtenus pour ces branches (I, II) sont appliqués chaque fois en opposition de phase à l'additionneur (1', 1) de l'autre branche,
caractérisé en ce que
chaque branche (I, II) comporte une installation supplémentaire (2, 2', B) pour mesurer l'amplitude du signal utile ou signal parasite (N, S) et en fonction des valeurs de mesure des amplitudes on règle automatiquement l'amplitude du signal (N', S') généré dans la branche respective.

3. Circuit de suppression de signaux parasites (S) contenus dans le signal de réception (E) du récepteur d'un système de transmission d'information à haute fréquence, produits au moins par le canal (K2) voisin du canal (K1) du signal utile (N), pour lequel le signal de réception (E) est réparti entre deux branches (I, II) dont l'une (I) comprend un additionneur (1) ainsi qu'un circuit (DUP, 2-9) pour générer un signal (N') de fréquence et d'amplitude correspondant à celles du signal utile (N) et l'autre branche (II) comporte également un additionneur (1') ainsi qu'un circuit (DUP, 2'-9') générant un signal (S') de fréquence et d'amplitude correspondant à celles du signal parasite (S) et les signaux (N', S') ainsi formés dans les branches (I, II) sont appliqués chaque fois en opposition de phase à l'additionneur (1', 1) de l'autre branche,
caractérisé en ce que
les branches (I, II) comportent un circuit d'estimation et de commande (B) qui mesure la fréquence instantanée (fl) du signal utile (N) associé à l'une des branches (I) et la fréquence instantanée (f2) du signal parasite (S) associé à l'autre branche (II),
chaque branche (I, II) comprend une installation supplémentaire (2, 2', B) pour mesurer l'amplitude du signal utile ou signal parasite (N, S),
et ce circuit d'estimation et de commande (B) et l'installation de mesure d'amplitude (2, 2', B) règlent automatiquement la fréquence et l'amplitude du signal (N', S') généré dans la branche respective.

4. Circuit selon la revendication 1 ou la revendication 3,
caractérisé en ce que
le circuit d'estimation et de commande (B) définit la fréquence de l'arrivée des fréquences instantanées dans les branches et en fonction de cela on règle la fréquence du signal (N', S') correspondant au signal utile ou au signal parasite dans le circuit de génération de signal (DUP, 2-9) de la branche correspondante (I, II).

5. Circuit selon les revendications 1, 3 ou 4,
caractérisé en ce que
le circuit d'estimation et de commande (B) mesure en outre la phase instantanée (ϕ) des fréquences (f1, f2) mesurées de manière instantanée et en fonction de ces phases on règle la phase du signal (N', S') généré dans la branche respective.

6. Circuit selon les revendications 1, 3, 4 ou 5, dont le circuit pour générer un signal (N', S') ayant une fréquence correspondant à celle du signal utile ou du signal parasite est chaque fois formé par une boucle de régulation de phase (4) avec un oscillateur (5) commandé en tension,
caractérisé en ce que
la mesure de la fréquence et de la phase du signal utile ou du signal parasite (N, S) associé à la branche (I, II) respectives se fait par mesure de la fréquence de sortie (f₁, f₂) ou de la tension de commande (U₁, U₂) de l'oscillateur commandé en tension (5, 5').

7. Circuit selon la revendication 6,
caractérisé en ce que
le circuit d'estimation et de commande (B) commande en fonction des valeurs de mesure de la fréquence et de la phase, la largeur de bande du filtre passe-bas (7, 7') de la boucle de régulation de phase (4, 4').

8. Circuit selon la revendication 6,
caractérisé en ce que
l'oscillateur commandé en tension (5, 5') est réglé par le circuit d'exploitation et de commande (B) sur une fréquence obtenue par l'exploitation de la distribution des fréquences instantanées.

9. Circuit selon l'une des revendications 2 à 8,
caractérisé en ce qu'
un élément de réglage de niveau (9, 9') réglé automatiquement par l'installation de mesure d'amplitude (2, 2', B). est prévu chaque fois entre le circuit (DUP, 2-9) générant le signal de l'une des branches (I) et l'additionneur (1') de l'autre branche (II).

10. Circuit selon la revendication 9,
caractérisé en ce que
la vitesse de réglage des éléments de réglage de niveau (9, 9') est fixée en fonction des valeurs de mesure exploitées par le circuit d'exploitation et de commande.

11. Circuit selon la revendication 9,
caractérisé en ce que
l'installation de mesure d'amplitude est un circuit d'estimation d'amplitude (2, 2') prévu chaque fois dans une branche servant à commander les éléments de réglage de niveau (9, 9').

12. Circuit selon la revendication 9,
caractérisé en ce que
le circuit d'estimation et de commande (B) et les éléments de réglage de niveau (9, 9') sont ainsi commandés, la mesure et l'estimation de l'amplitude du signal utile ou du signal parasite (N, S).

13. Circuit selon l'une des revendications précédentes,
caractérisé en ce que
la mesure des grandeurs et la commande qui en est déduite se font dans le plan haute fréquence et/ou de fréquence intermédiaire et/ou de basse fréquence.

14. Circuit selon l'une des revendications précédentes,
caractérisé en ce que
le circuit de réglage de signal (DUP, 2-9, 2'-9') forme en plus d'un circuit d'estimation d'amplitude (2, 2') et un élément de réglage de niveau et de phase (9, 8, 9', 8'), chaque fois un circuit de base (DUP) identique dans toutes les branches (1, 2), avec en amont et en aval de ce circuit de base (DUP), chaque fois un mélangeur (M) et un oscillateur de combinaison (0₁...0ₙ) associés à ces mélangeurs (M), cet oscillateur étant réglé par le circuit d'estimation et de commande (B) sur une fréquence mélangée correspondant chaque fois à la fréquence souhaitée pour la branche.

15. Circuit selon l'une des revendications précédentes,
caractérisé par
son application comme installation de mesure permettant de mesurer des grandeurs électriques quelconques de signaux utiles, nettoyés et/ou de signaux parasites (N, S).
